# FASCICULE DE BREVET EUROPEEN

(11) **EP 0 452 207 B1**
(45) Date de publication et mention de la délivrance du brevet: **23.10.1996**
(21) Numéro de dépôt: 91400948.5
(22) Date de dépôt: 09.04.1991
(51) Int. Cl.: C03C 4/02, C03C 3/078, C03C 3/087

(54) **Composition de verre coloré et vitrage réalisé à partir dudit verre**
Farbige Glaszusammensetzung und damit hergestellte Verglasung
Coloured glass composition and glazing produced therewith

(30) Priorité: 13.04.1990 FR 9004805
(43) Date de publication de la demande: 16.10.1991
(73) Titulaire: SAINT-GOBAIN VITRAGE, F-92400 Courbevoie (FR)
(72) Inventeur: Combes, Pierre, F-92170 Vanves (FR); Massol, Jean-Jacques, F-92600 Asnieres (FR); Casariego Alvarez, Pédro, E-33400 Salinas (ES)
(74) Mandataire: Breton, Jean-Claude

(56) Documents cités:
- EP-A- 0 349 909
- DE-A- 1 023 863
- FR-A- 2 270 215
- FR-A- 2 527 758
- US-A- 4 104 076
- CHEMICAL ABSTRACTS, vol. 88, no. 24, 12 juin 1978, Columbus, Ohio, USA page 356; ref. no. 175980p & JP-A-52102311 (TOYO GLASS) (27-08-77)
- CHEMICAL ABSTRACTS, vol. 107, no. 18, 02 novembre 1987, Columbus, Ohio, USA page 371; ref. no. 160079p & SU-A-1315401 (STATE SC. RES. INST.) (07-06-87)
- CHEMICAL ABSTRACTS, vol. 98, no. 2, 10 janvier 1983, Columbus, Ohio, USA page 177; ref. no. 7450d & JP-A-57106537 (NIPPON SHEET GLASS) (02-07-82)

## Description

La présente invention se rapporte à une composition de verre coloré destiné à la fabrication d'un vitrage susceptible, notamment, d'être monté sur un véhicule automobile. Elle vise plus particulièrement une composition de verre permettant de réaliser un vitrage susceptible de former le toit ouvrant d'un véhicule automobile.

Les constructeurs d'automobiles proposent à leurs clients des vitrages en verres colorés qui jouent un rôle fonctionnel et doivent séduire par leur aspect. D'une année à l'autre, la progression de la surface vitrée sur les nouveau modèles présentés montre que cette tendance s'affirme.

Du fait de cette évolution, l'effet de serre constitue désormais un facteur important à prendre en compte dans la climatisation des véhicules automobiles. C'est tout particulièrement vrai pour les vitrages servant de toits ouvrants.

Il est déjà connu d'utiliser des vertes colorés pour réaliser des vitrages qui protègent de la chaleur. C'est notamment le cas des vertes décrits dans le brevet US-A-4 104 076, qui comprennent comme agents colorants des oxydes de fer, de cobalt, éventuellement du sélénium, auxquels on ajoute systématiquement de l'oxyde de chrome et/ou de l'oxyde d'uranium. Ces vertes, qui doivent transmettre moins de 50% de l'énergie solaire sous une épaisseur de 6,2 millimètres, conviennent plus particulièrement à la réalisation de vitrages destinés à des applications architecturales

L'invention se propose de fournir des verres fortement colorés dans la masse, notamment des verres gris-bleu ou en vert, qui sont bien adaptés pour cette application et qui présentent, pour une épaisseur déterminée, une transmission lumineuse globale et une transmission énergétique globale très faibles.

D'après l'invention, ce but est atteint grâce à un verre coloré dont la composition comprend les constituants ci-après dans les proportions pondérales définies par les limites suivantes :

| | |
|---|---|
| - SiO₂ | 64 à 75 % |
| - Al₂O₃ | 0 à 5 % |
| - B₂O₃ | 0 à 5 % |
| - CaO | 5 à 15 % |
| - MgO | 0 à 5 % |
| - Na₂O | 10 à 18 % |
| - K₂O | 0 à 5 % |

la somme des oxydes alcalins terreux étant comprise entre 6 et 16 % et celles des oxydes alcalins entre 10 et 20 % et comprenant à titre d'agents colorants :

| | |
|---|---|
| - Fe₂O₃ (fer total) | 1,4 à 4 % |

sachant que la teneur du fer sous forme d'oxyde ferreux représente entre 16 et 40 % dudit fer total,

| | |
|---|---|
| - CoO | 0 à 0,05 % |

avec CoO > à environ 0,02 % lorsque Fe₂O₃ < à environ 2 %, ainsi qu'éventuellement du sélénium et de l'oxyde de chrome, la somme CoO + Se + Cr₂O₃ pouvant atteindre 0,24 %, ledit verre ayant un facteur de transmission lumineuse globale sous illuminant A (TL_{A}) égal ou inférieur à environ 20 % et un facteur de transmission énergétique globale (T_{E}) inférieur ou égal à environ 12 % pour une épaisseur de 3,85 mm, et présentant, sous illuminant C, une longueur d'onde dominante comprise entre 485 et 570 nanomètres.

Les verres selon l'invention sont élaborés dans des conditions telles que leur rédox, c'est-à-dire, le rapport de l'oxyde ferreux par rapport à la quantité totale de fer exprimée sous forme d'oxyde ferrique, demeure compris entre environ 0,16 et environ 0,40. La majeure partie des verres selon l'invention, tout au moins ceux comprenant une teneur en fer égale ou supérieure à environ 2 % sont élaborés dans des fours électriques ; les autres sont susceptibles d'être fondus dans des fours à flammes classiques.

Pour une épaisseur déterminée, les verres colorés selon l'invention présente, de préférence, une transmission lumineuse globale inférieure à environ 15 %, voire même inférieure à 12 %. La transmission énergétique globale de ces verres est, en général, inférieure à environ 8 %.

Pour obtenir les caractéristiques optiques désirées, notamment les valeurs des transmissions précitées, les pourcentages exacts des agents colorants dans le verre seront ajustés en prenant en considération l'épaisseur choisie.

Ainsi, pour une épaisseur de 3,85 millimètres, les verres colorés selon l'invention peuvent comprendre comme seuls agents colorants des oxydes de fer, lorsque leur teneur totale, exprimée en Fe₂O₃, excède environ 3 %. Pour ces verres, les conditions d'élaboration sont contrôlées afin que leur rédox demeure, de préférence, égal ou inférieur à 0,30. La longueur d'onde dominante des verres ainsi obtenus, éclairés sous illuminant C, est comprise entre environ 500 et 570 nanomètres.

Pour la même épaisseur, les verres colorés selon la présente invention, dont la teneur totale en oxyde de fer, exprimée en Fe₂O₃, est égale ou inférieure à environ 3 %, peuvent comprendre également comme agent colorant de l'oxyde de cobalt.

C'est ainsi que selon un des aspects de l'invention, les verres colorés comprennent entre environ 2 et 3 % de Fe₂O₃ et environ 140 et 400 ppm de CoO et, éventuellement, jusqu'à 50 ppm de sélénium.

Ces verres présentent en général une longueur d'onde dominante, sous illuminant C, comprise approximativement entre 485 et 505 nanomètres. Leur facteur de transmission énergétique globale est égal ou inférieur à environ 10 % et généralement compris entre 4 et 6,5 %. La pureté d'excitation de ces verres, sous illuminant C, est généralement inférieure à environ 30%. Les verres selon l'invention, qui possèdent un facteur de transmission lumineuse globale particulièrement faible, peuvent avoir une pureté d'excitation assez élevée sans pour autant affecter exagérément la neutralité de la couleur.

Les verres selon l'invention peuvent comprendre une plus faible teneur associée à l'oxyde de cobalt et au sélénium dans les proportions pondérales suivantes :

| | |
|---|---|
| - Fe₂O₃ | de 1,4 à 2,5 % |
| - CoO | de 150 à 330 ppm |
| - sélénium | de 10 à 35 ppm. |

Ces verres, éclairés sous illuminant C, présentent une longueur d'onde dominante comprise entre environ 485 et 570 nanomètres et leur pureté d'excitation est généralement inférieure à 20 %. Leur facteur de transmission énergétique globale est inférieur à 10 % et le plus souvent compris entre 5 et 8 %. Les verres présentant une longueur d'onde dominante comprise entre 485 et 500 nanomètres sont préférés pour des raisons d'ordre esthétique.

Pour une épaisseur de 3,85 millimètres, les verres colorés de l'invention, dont la teneur totale en oxyde de fer, exprimée en Fe₂O₃, est égale ou inférieure à environ 2,5 %, peuvent comprendre de l'oxyde de cobalt et de l'oxyde de chrome.

Ainsi, selon un des aspects de l'invention, les verres colorés comprennent entre environ 1,5 et 2,5 % de Fe₂O₃, entre environ 150 et 300 ppm d'oxyde de cobalt et entre 700 et 2000 ppm d'oxyde de chrome. Ces verres, éclairés sous illuminant C, présentent une longueur d'onde dominante comprise approximativement entre 490 et 510 nanomètres et une pureté d'excitation de l'ordre de 10 à 25 %. Leur facteur de transmission énergétique globale est inférieur à 10 % et, en général, compris entre environ 5 et 8 %.

Pour préparer les verres de l'invention, on utilise comme composition de base une composition de verre traditionnelle dans l'industrie du verre plat, dans laquelle on ajoute les agents colorants suivant des proportions qui permettent, pour une épaisseur déterminée, d'obtenir les caractéristiques optiques et l'apparence recherchées. Le verre de base choisi a la composition pondérale suivante :

| | |
|---|---|
| - SiO₂ | 72,1 % |
| - Al₂O₃ | 0,74 % |
| - CaO | 8,90 % |
| - MgO | 3,79 % |
| - Na₂O | 14,16 % |
| - K₂O | 0,11 % |
| - SO₃ | 0,20 %. |

Les agents colorants sont ajoutés dans ce verre au détriment de la silice.

Les différents exemples figurant dans le tableau en annexe illustrent différentes combinaisons d'agents colorants. Les valeurs des caractéristiques optiques indiquées ont été mesurées sur des vitrages de 3,85 millimètres d'épaisseur.

Ces verres sont fondus dans des conditions telles qu'ils présentent un rédox qui soit, de préférence, égal ou inférieur à 0,35.

Pour les verres colorés par l'association des oxydes de fer et de cobalt et pour un pourcentage de fer compris entre environ 2 et 3 %, il est souhaitable d'introduire au moins environ 140 ppm de CoO, pour un vitrage de 3,85 millimètres d'épaisseur ; au-dessous de cette teneur la transmission lumineuse du verre a tendance à augmenter et peut dépasser 15 %.

Pour les verres colorés par l'association de sélénium et des oxydes de fer et de cobalt, il est recommandé d'introduire au moins 1,4 % d'oxyde de fer, pour un vitrage de 3,85 millimètres d'épaisseur. Au-dessous de ce pourcentage, les transmissions lumineuse et énergétique du verre dépassent respectivement les valeurs de 15 et 12 %.

Les compositions de verre exposées dans le tableau en annexe et les remarques précédentes sur certaines combinaisons d'agents colorants ne sont que des illustrations des nombreuses variantes susceptibles d'être réalisées sans sortir du cadre de l'invention.

Les verres selon l'invention sont compatibles avec les techniques habituelles de fabrication du verre plat sous réserve, pour certains verres, d'être élaborés dans des fours équipés d'électrodes. L'épaisseur du ruban de verre obtenu, par exemple, par nappage du verre en fusion sur un bain d'étain peut varier entre 2 et 10 millimètres et, de préférence, entre 3 et 6 millimètres lorsqu'il est destiné à la réalisation d'un vitrage pour toit ouvrant.

Le vitrage, obtenu par découpe d'un ruban de verre coloré selon l'invention suivie, éventuellement, d'un bombage, présente l'avantage d'être utilisé directement pour réaliser un toit ouvrant pour véhicule automobile conciliant les soucis d'ordre esthétique et le confort des passagers.

A l'instar d'autres vitrages, il peut être soumis au préalable à des traitements superficiels ou être associé, par exemple, à une feuille de verre non coloré, à un revêtement organique tel qu'un film à base de polyuréthanes à propriétés antilacérantes ou à un film assurant l'étanchéité en cas de bris ; il peut être revêtu localement d'une couche telle qu'une couche d'émail.

Les vitrages selon l'invention peuvent être revêtus d'au moins une couche d'oxyde métallique obtenue par dépôt chimique à haute température comme la pyrolyse ou le dépôt chimique en phase vapeur (CVD) ou par dépôt sous vide.

Ainsi les vitrages selon l'invention peuvent être revêtus d'une couche à base d'oxyde d'étain. Dans le cas d'un vitrage formant le toit ouvrant d'un véhicule automobile ceci permet d'améliorer encore le confort thermique. Une telle couche peut être obtenue par des moyens connus, par exemple selon le procédé décrit dans le brevet EP-B-121.459 qui consiste à décomposer thermiquement un composé organique d'étain.

**TABLEAU**

| Composition de verre n° | **Agents colorants (en % pondéraux)** | | | | |
|---|---|---|---|---|---|
| | Fe₂O₃ | CoO | Se | Cr₂O₃ | Fe(II)/Fe total |
| 1 | 3,72 | - | - | - | 0,26 |
| 2 | 1,45 | 0,0280 | 0,0024 | - | 0,35 |
| 3 | 1,54 | 0,0234 | 0,0026 | - | 0,34 |
| 4 | 1,59 | 0,0245 | 0,0031 | - | 0,35 |
| 5 | 1,58 | 0,0234 | 0,0023 | - | 0,39 |
| 6 | 1,76 | 0,0300 | 0,0023 | - | 0,33 |
| 7 | 1,74 | 0,0290 | 0,0019 | - | 0,34 |
| 8 | 2,27 | 0,0310 | 0,0015 | - | 0,34 |
| 9 | 2,85 | 0,0272 | - | - | 0,31 |
| 10 | 2,81 | 0,0160 | - | - | 0,26 |
| 11 | 2,80 | 0,0203 | - | - | 0,35 |
| 12 | 2,91 | 0,0270 | - | - | 0,27 |
| 13 | 2,36 | 0,0250 | - | 0,15 | 0,30 |

| Composition de verre n° | **Caractéristiques optiques** | | | | |
|---|---|---|---|---|---|
| | TL_{A} (%) | TE (%) | λ (nm) | P_{C} (%) | |
| 1 | 11,3 | 4,5 | 566 | 43,7 | |
| 2 | 11,7 | 8,4 | 485 | 14,7 | |
| 3 | 9,8 | 6,5 | 551 | 7,2 | |
| 4 | 10,1 | 7,1 | 565 | 11,6 | |
| 5 | 11,7 | 7,2 | 493 | 8,3 | |
| 6 | 9,3 | 6,4 | 489 | 12,3 | |
| 7 | 11,1 | 7,5 | 485 | 19,3 | |
| 8 | 7,8 | 4,5 | 488 | 20,3 | |
| 9 | 8,2 | 4,2 | 489 | 25,7 | |
| 10 | 13,5 | 6,3 | 502 | 10,8 | |
| 11 | 9,7 | 4,5 | 494 | 17,3 | |
| 12 | 10,2 | 5,4 | 490 | 22,4 | |
| 13 | 11,1 | 7,0 | 500 | 18,2 | |

## Revendications

1. Composition de verre coloré, destiné à la fabrication d'un vitrage susceptible d'être monté sur un véhicule automobile, comprenant comme constituants principaux les oxydes ci-après dans les limites pondérales suivantes :
| | |
|---|---|
| SiO₂ | 64 à 75 % |
| Al₂O₃ | 0 à 5 % |
| B₂O₃ | 0 à 5 % |
| CaO | 5 à 15 % |
| MgO | 0 à 5 % |
| Na₂O | 10 à 18 % |
| K₂O | 0 à 5 % |
la somme des oxydes alcalins terreux étant comprise entre 6 et 16% et celle des oxydes alcalins entre 10 et 20% et comprenant à titre d'agents colorants :
| | |
|---|---|
| Fe₂O₃ | 1,4 à 4 % |
sachant que la teneur du fer sous forme d'oxyde ferreux représente entre 16 et 40% dudit fer total,
| | |
|---|---|
| CoO | 0 à 0.05 % |
avec CoO > à environ 0,02% lorsque Fe₂O₃ < à environ 2%, ainsi qu'éventuellement du sélénium et de l'oxyde de chrome
CoO + Se + Cr₂O₃ pouvant atteindre 0,24 %,
ledit verre ayant un facteur de transmission lumineuse globale sous illuminant A (TL_{A}) égal ou inférieur à environ 20% et un facteur de transmission énergétique globale (T_{E}) inférieur ou égal à environ 12% pour une épaisseur de 3,85 mm, et présentant, sous illuminant C, une longueur d'onde dominante comprise entre 485 et 570 nanomètres.

2. Composition selon l'une des revendications précédentes, **caractérisée en ce qu'**elle comprend à titre d'agents colorants, de 3 à 4% d'oxydes de fer exprimé sous la forme de Fe₂O₃.

3. Composition selon la revendication 1, **caractérisée en ce qu'**elle comprend à titre d'agents colorants :
| | |
|---|---|
| Fe₂O₃ (fer total) | 2 à 3 % |
| CoO | 0,014 à 0,04 % |
| Se | 0 à 0.005 % |

4. Composition selon la revendication 1, **caractérisée en ce qu'**elle comprend à titre d'agents colorants :
| | |
|---|---|
| Fe2O3 (fer total) | 1,4 à 2,5 % |
| CoO | 0,015 à 0,033 % |
| Se | 0,0010 à 0,0035 % |

5. Composition selon à revendication 1, **caractérisée en ce qu'**elle comprend à titre d'agents colorants :
| | |
|---|---|
| Fe2O3 (fer total) | 1,4 à 2,5 % |
| CoO | 0,015 à 0,030 % |
| Cr₂O₃ | 0,07 à 0,2 % |

6. Vitrage comprenant une feuille de verre coloré, **caractérisé en ce que** la composition dudit verre est définie par la revendication 2.

7. Vitrage comprenant une feuille de verre coloré, **caractérisé en ce que** la composition dudit verre est définie par la revendication 3.

8. Vitrage comprenant une feuille de verre coloré, **caractérisé en ce que** la composition dudit verre est définie par la revendication 4.

9. Vitrage comprenant une feuille de verre coloré**, caractérisé en ce que** la composition dudit verre est définie par la revendication 5.

10. Vitrage selon l'une des revendications 6 à 9, **caractérisé en ce qu**'il est formé d'une feuille de verre coloré dont l'épaisseur est comprise entre 2 et 10 millimètres et, de préférence, entre 3 et 6 millimètres.

11. Vitrage selon la revendication 10, **caractérisé en ce qu'**il est revêtu d'au moins une couche d'oxyde métallique, tel que l'oxyde d'étain.

## Claims

1. Coloured glass composition for the production of a glazing which can be fitted in a car, incorporating as the main constituents the following oxides in the following weight limits:
| | |
|---|---|
| - SiO₂ | 64 to 75% |
| - Al₂O₃ | 0 to 5% |
| - B₂O₃ | 0 to 5% |
| - CaO | 5 to 15% |
| - MgO | 0 to 5% |
| - Na₂O | 10 to 18% |
| - K₂O | 0 to 5% |
the sum of the alkaline earth oxides being between 6 and 16% and that of the alkali metal oxides between 10 and 20% and incorporating as colouring agents:
| | |
|---|---|
| - Fe₂O₃ | 1.4 to 4% |
knowing that the content of iron in the form of ferrous oxide is between 16 and 40% of the total iron,
| | |
|---|---|
| - CoO | 0 to 0.05% |
with CoO > approximately 0.02% when Fe₂O₃ < approximately 2%, as well as optionally selenium and chromium oxide, the sum CoO + Se + Cr₂O₃ being up to 0.24%, said glass having a total light transmission factor under illuminant A (TL_{A}) equal to or below approximately 20% and a total energy transmission factor (T_{E}) equal to or below approximately 12% for a thickness of 3.85 mm and having, under illuminant C, a dominant wavelength between 485 and 570 nanometres.

2. Composition according to one of the preceding claims, characterized in that it comprises as colouring agents 3 to 4% iron oxides expressed in the form of Fe₂O₃.

3. Composition according to claim 1, characterized in that it comprises as colouring agents:
| | |
|---|---|
| - Fe₂O₃ (total iron) | 2 to 3% |
| - CoO | 0.014 to 0.04% |
| - Se | 0 to 0.005% |

4. Composition according to claim 1, characterized in that it comprises as colouring agents:
| | |
|---|---|
| - Fe₂O₃ (total iron) | 1.4 to 2.5% |
| - CoO | 0.015 to 0.033% |
| - Se | 0.0010 to 0.0035% |

5. Composition according to claim 1, characterized in that it comprises as colouring agents:
| | |
|---|---|
| - Fe₂O₃ (total iron) | 1.4 to 2.5% |
| - CoO | 0.015 to 0.030% |
| - Cr₂O₃ | 0.07 to 0.2% |

6. Glazing incorporating a coloured glass sheet, characterized in that the composition of said glass is defined by claim 2.

7. Glazing incorporating a coloured glass sheet, characterized in that the composition of said glass is defined by claim 3.

8. Glazing incorporating a coloured glass sheet, characterized in that the composition of said glass is defined by claim 4.

9. Glazing incorporating a coloured glass sheet, characterized in that the composition of said glass is defined by claim 5.

10. Glazing according to one of the claims 6 to 9, characterized in that it is formed by a coloured glass sheet, whose thickness is between 2 and 10 millimetres and preferably between 3 and 6 millimetres.

11. Glazing according to claim 10, characterized in that it is coated with at least one metal oxide layer, such as a tin oxide layer.

## Patentansprüche

1. Farbglaszusammensetzung, die zur Herstellung einer Verglasung vorgesehen ist, welche in ein Kraftfahrzeug eingebaut werden kann, als Hauptbestandteile nachstehende Oxide innerhalb folgender Gewichtsgrenzen
| | |
|---|---|
| SiO₂ | 64 bis 75 %, |
| Al₂O₃ | 0 bis 5 %, |
| B₂O₃ | 0 bis 5 %, |
| CaO | 5 bis 15 %, |
| MgO | 0 bis 5 %, |
| Na₂O | 10 bis 18 % und |
| K₂O | 0 bis 5 % |
umfaßt, wobei die Summe der Erdalkalioxide 6 bis 16 % und die der Alkalioxide 10 bis 20 % beträgt, und als Färbungsmittel
| | |
|---|---|
| Fe₂O₃ | 1,4 bis 4 %, |
unter der Voraussetzung, daß der Gehalt an Eisen in Form von Eisen(II)-oxid zwischen 16 und 40 % des Gesamteisens ausmacht,
| | |
|---|---|
| CoO | 0 bis 0,05 %, |
mit CoO > etwa 0,02 %, wenn Fe₂O₃ < etwa 2 %,
sowie gegebenenfalls Selen und Chromoxid enthält,
CoO + Se + Cr₂O₃ können 0,24 % erreichen,
wobei das Glas bei einer Dicke von 3,85 mm einen Gesamtlichttransmissionsgrad unter dem Beleuchtungskörper A (T_{LA}) von höchstens etwa 20 %, einen Gesamtenergiedurchgangsgrad (T_{E}) von höchstens etwa 12 % und unter dem Beleuchtungskörper C eine dominierende Wellenlänge von 485 bis 570 Nanometern besitzt.

2. Zusammensetzung nach Anspruch 1, **dadurch gekennzeichnet**, **daß** sie als Färbungsmittel 3 bis 4 % Eisenoxide, ausgedrückt als Fe₂O₃, umfaßt.

3. Zusammensetzung nach Anspruch 1, **dadurch gekennzeichnet**, **daß** sie als Färbungsmittel
| | |
|---|---|
| Fe₂O₃ (Gesamteisen) | 2 bis 3 %, |
| CoO | 0,014 bis 0,04 % und |
| Se | bis zu 0,005 % |
umfaßt.

4. Zusammensetzung nach Anspruch 1, **dadurch gekennzeichnet**, **daß** sie als Färbungsmittel
| | |
|---|---|
| Fe₂O₃ (Gesamteisen) | 1,4 bis 2,5 %, |
| CoO | 0,015 bis 0,033 % und |
| Se | 0,0010 bis 0,0035 % |
umfaßt.

5. Zusammensetzung nach Anspruch 1, **dadurch gekennzeichnet**, **daß** sie als Färbungsmittel
| | |
|---|---|
| Fe₂O₃ (Gesamteisen) | 1,4 bis 2,5 %, |
| CoO | 0,015 bis 0,030 % und |
| Cr₂O₃ | 0,07 bis 0,2 % |
umfaßt.

6. Eine Farbglasscheibe enthaltende Verglasung, **dadurch gekennzeichnet**, **daß** die Zusammensetzung des Glases durch Anspruch 2 festgelegt ist.

7. Eine Farbglasscheibe enthaltende Verglasung, **dadurch gekennzeichnet**, **daß** die Zusammensetzung des Glases durch Anspruch 3 festgelegt ist.

8. Eine Farbglasscheibe enthaltende Verglasung, **dadurch gekennzeichnet**, **daß** die Zusammensetzung des Glases durch Anspruch 4 festgelegt ist.

9. Eine Farbglasscheibe enthaltende Verglasung, **dadurch gekennzeichnet**, **daß** die Zusammensetzung des Glases durch Anspruch 5 festgelegt ist.

10. Verglasung nach einem der Ansprüche 6 bis 9, **dadurch gekennzeichnet, daß** sie aus einer Farbglasscheibe gebildet ist, deren Dicke zwischen 2 und 10 Millimetern und vorzugs-weise zwischen 3 und 6 Millimetern beträgt.

11. Verglasung nach Anspruch 10, **dadurch gekennzeichnet**, **daß** sie mit mindestens einer Schicht aus einem Metalloxid wie Zinnoxid beschichtet ist.
